# EUROPÄISCHE PATENTANMELDUNG

(11) **EP 1 389 698 A2**
(43) Veröffentlichungstag der Anmeldung: **18.02.2004**
(21) Anmeldenummer: 03018077.2
(22) Anmeldetag: 08.08.2003
(51) Int. Cl.: F16H 63/04

(54) **Vorrichtung zum Unterbrechen einer Drehmomentverbindung eines Getriebes**

(30) Priorität: 12.08.2002 US 217298
(71) Anmelder: DEERE & COMPANY, Moline, Illinois 61265-8098 (US)
(72) Erfinder: Ore, Thomas George, Cedar Falls, IA 50613 (US); Gogola, John C., Cedar Falls, IA 50613 (US); Johnson, Paul Warren, Denver, IA 50622 (US)
(74) Vertreter: Lau-Loskill, Philipp, Dipl.-Phys.

(57) **Zusammenfassung**

Die vorliegende Erfindung betrifft eine Vorrichtung zum Unterbrechen einer Drehmomentverbindung eines Getriebes (10), mit welcher eine Übertragung eines Drehmoments von einer ersten Welle (14) auf eine zweite Welle (16) des Getriebes (10) steuerbar ist. Die erfindungsgemäße Vorrichtung umfasst ein Gehäuse (12), ein Kupplungselement (52) und einen Stöpsel (72). Das Gehäuse (12) nimmt eine erste Welle (14) und eine zweite Welle (16) drehbar auf und weist eine Öffnung (70) auf. Das Kupplungselement (52) ist von einer eingerückten Position, in welcher das Kupplungselement (52) die erste Welle (14) mit der zweiten Welle (16) kuppelt, in eine ausgerückte Position verbringbar, in welcher die erste Welle (14) von der zweiten Welle (16) abgekuppelt ist. Der Stöpsel (72) ist in der Öffnung (70) befestigbar und mit dem Kupplungselement (52) in Eingriff bringbar. Der Stöpsel (72) ist von einer ersten Position, in welcher der Stöpsel (72) das Kupplungselement (52) in der eingerückten Position hält, zu einer zweiten Position verbringbar, in welcher der Stöpsel (72) das Kupplungselement (52) in der ausgerückten Position hält. Die erfindungsgemäße Vorrichtung ist verglichen zu den bereits bekannten Vorrichtungen vereinfacht ausgebildet und umfasst weniger Bauteile.

## Beschreibung

Die Erfindung betrifft eine Vorrichtung zum Unterbrechen einer Drehmomentverbindung eines Getriebes, mit welcher eine Übertragung eines Drehmoments von einer ersten Welle zu einer zweiten Welle in dem Getriebe steuerbar ist.

Bei einer Wartung oder Diagnose eines Getriebes ist es wünschenswert, die Ausgangswelle des Getriebes abzukoppeln und hierbei zu verhindern, dass ein Drehmoment auf die Ausgangswelle übertragen wird. Das Getriebe mit der Bezeichnung "JD R189624 MR AutoPowr" aus der laufenden Produktion eines Traktors der Anmelderin umfasst eine Schaltmuffe, welche ein Zahnradpaar koppelt und abkuppelt, wobei das Zahnradpaar im gekuppelten Betriebszustand ein Drehmoment von einer Planetengetriebewelle auf eine Ausgangswelle des Getriebes überträgt. Eine drehbar gelagerte Schaltgabel ist zwischen der Schaltmuffe und einem Arm angeordnet, welcher aus dem Getriebe herausragt. Eine lange Ausrückstange erstreckt sich zum hinteren Bereich des Traktors und steht mit einer unter Federlast stehender Halterung in Eingriff. Aufgrund der Summierung von Toleranzen ist es möglich, dass die Schaltgabel an der verschiebbaren Schaltmuffe während des normalen Betriebs reibt. Weiterhin nehmen diese Bauteile Bauraum im hinteren Bereich des Traktors in Anspruch, obwohl diese Bauteile nur selten verwendet werden.

Der vorliegenden Erfindung liegt daher die Aufgabe zugrunde, eine Vorrichtung der eingangs genannten Art anzugeben und weiterzubilden, durch welche die vorgenannten Probleme überwunden werden. Insbesondere soll eine vereinfachte Vorrichtung zum Unterbrechen einer Drehmomentverbindung eines Getriebes angegeben werden, welche einfacher ausgebildet ist und weniger Bauteile umfasst.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Vorrichtung zum Unterbrechen einer Drehmomentverbindung eines Getriebes, mit welcher eine Übertragung eines Drehmoments von einer ersten Welle an eine zweite Welle des Getriebes steuerbar ist, weist ein Gehäuse, ein Kupplungselement und einen Stöpsel auf. Das Gehäuse nimmt eine erste Welle und eine zweite Welle drehbar auf und weist eine Öffnung auf. Das Kupplungselement ist von einer eingerückten Position, in welcher das Kupplungselement die erste Welle mit der zweiten Welle kuppelt, in eine ausgerückte Position verbringbar, in welcher die erste Welle von der zweiten Welle abgekuppelt ist. Der Stöpsel ist in der Öffnung befestigbar und mit dem Kupplungselement in Eingriff bringbar. Der Stöpsel ist von einer ersten Position, in welcher der Stöpsel das Kupplungselement in der eingerückten Position hält, zu einer zweiten Position verbringbar, in welcher der Stöpsel das Kupplungselement in der ausgerückten Position hält.

Vorzugsweise weist das Kupplungselement ein hohles, ringförmiges Bauteil auf, welches eine der beiden Wellen aufnimmt.

In einer bevorzugten Ausführungsform weist der Stöpsel einen im Wesentlichen zylindrischen Kopfabschnitt auf, welcher von der Öffnung aufnehmbar ist. Der Stöpsel weist eine Nase auf, welche von dem Kopfabschnitt abragt. Die Nase ist mit dem Kupplungselement in Eingriff bringbar. Die Nase ist seitlich versetzt zu einer Mittelachse angeordnet.

Vorzugsweise ist ein Antriebszahnrad drehbar auf der ersten Welle angebracht. Das Antriebszahnrad weist einen ersten Satz von Zähnen auf, welche im kämmenden Eingriff mit hierzu korrespondierenden, an der zweiten Welle vorgesehenen Zähnen stehen. Das Antriebszahnrad weist einen zweiten Satz von Zähnen auf, die zur Drehmomentübertragung durch das Kupplungselement mit der ersten Welle verbindbar ist.

Vorzugsweise ist auf der ersten Welle ein Nabenzahnrad drehfest angebracht, wobei das Zahnrad einen Satz von Zähnen aufweist, die durch das Kupplungselement mit dem zweiten Satz von Zähnen in Eingriff bringbar sind.

In einer bevorzugten Ausführungsform weist das Kupplungselement eine Schaltmuffe auf, welches mit dem Antriebszahnrad und - vorzugsweise selektierbar - mit dem Zahnrad in Eingriff bringbar ist. Die Schaltmuffe weist eine ringförmige Ausnehmung auf, welche einen Teil des Stöpsels aufnimmt, insbesondere die Nase des Stöpsels.

Vorzugsweise ist das Kupplungselement mit dem Antriebszahnrad und dem Nabenzahnrad in Eingriff bringbar. Das Kupplungselement ist von einer eingerückten Position, in welcher das Kupplungselement die Zähne des Zahnrads mit dem zweiten Satz von Zähnen des Antriebszahnrads kuppelt, zu einer ausgerückten Position verbringbar, in welcher die Zähne des Nabenzahnrads mit dem zweiten Satz von Zähnen des Antriebszahnrads abgekuppelt sind.

In einer bevorzugten Ausführungsform weist das Kupplungselement ein hohles, ringförmiges Bauteil auf, welches einen ersten Satz von inneren Zähnen und einen davon in axialer Richtung beabstandet angeordneten zweiten Satz von inneren Zähnen aufweist. Eine äußere Oberfläche des ringförmigen Bauteils weist einen ersten und einen zweiten Ringsteg auf. Der erste und der zweite Ringsteg sind durch eine außen verlaufende, ringförmige Ausnehmung voneinander beabstandet angeordnet. Der erste Satz der inneren Zähne kämmt mit dem zweiten Satz der Zähne des Antriebszahnrads. Der zweite Satz der inneren Zähne kämmt selektierbar mit den Zähnen eines Eingangswellenzahnrades, vorzugsweise des Nabenzahnrads selektierbar. Vorzugsweise ist eine ringförmige Ausnehmung zwischen dem ersten und dem zweiten Satz von inneren Zähnen vorgesehen.

Vorzugsweise nimmt die ringförmige Ausnehmung des Kupplungselements die Zähne des Antriebszahnrads auf, wenn das Kupplungselement in seiner ausgerückten Position ist.

Zweckmäßigerweise weist der Stöpsel in einer äußeren Oberfläche eine Apertur auf, welche ein Werkzeug aufnehmen kann.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen in einer schematischen Darstellung
- Fig. 1: eine vereinfachte Schnittdarstellung eines erfindungsgemäßen Ausführungsbeispiels einer Vorrichtung zum Unterbrechen einer Drehmomentverbindung eines Getriebes, wobei das Getriebe in einem gekuppelten Zustand gezeigt ist,
- Fig. 2: das Ausführungsbeispiel gemäß Fig. 1, wobei das Getriebe in einem abgekuppelten Zustand gezeigt ist,
- Fig. 3: eine Schnittansicht eines Teils einer in Fig. 1 gezeigten Schaltmuffe,
- Fig. 4: eine perspektivische Ansicht der Schaltmuffe aus Fig. 1,
- Fig. 5: eine perspektivische Ansicht des Stöpsels zur Lagefixierung des ringförmigen Zahnrads aus Fig. 1,
- Fig. 6: eine Draufsicht des Stöpsels zur Lagefixierung des ringförmigen Zahnrads aus Fig. 1,
- Fig. 7: eine Schnittansicht entlang der Linien 7-7 aus Fig. 6 und
- Fig. 8: eine Schnittansicht entlang der Linie 8-8 aus Fig. 6.

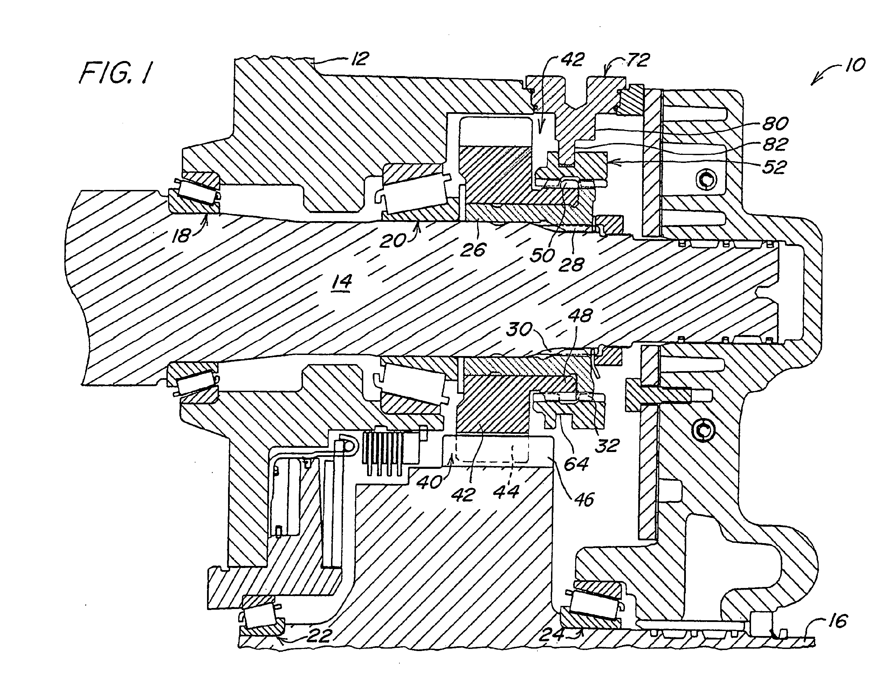

Fig. 1 zeigt einen Teil eines Getriebes 10, welches ein Gehäuse 12 umfasst, welches die Wellen 14 und 16 drehbar aufnimmt. Die Welle 14 könnte eine Ausgangswelle eines in Fig. 1 nicht gezeigten Planetengetriebes sein und die Welle 16 könnte eine Ausgangswelle des Getriebes 10 sein. Die Welle 14 ist von den Lagern 18 und 20 gelagert. Die Welle 16 ist von den Lagern 22 und 24 gelagert. Ein hohles Nabenwellenzahnrad 26 ist auf der Welle 14 montiert. Das Zahnrad 26 umfasst eine innere Keilverzahnung oder Zähne 28, welche mit einer äußeren Keilverzahnung 30 der Welle 14 in Eingriff stehen. Das Zahnrad 26 umfasst auch äußere Zähne 32.

Ein Antriebszahnrad 40 ist drehbar auf einem Abschnitt des Zahnrads 26 montiert. Das Antriebszahnrad 40 umfasst einen Abschnitt 42, welcher einen größeren Durchmesser aufweist und an welchem Zähne 44 vorgesehen sind. Die Zähne 44 greifen in korrespondierende Zähne 46 der Welle 16 ein. Das Antriebszahnrad 40 umfasst weiterhin einen Abschnitt 48, welcher einen kleineren Durchmesser aufweist und an welchem Zähne 50 vorgesehen sind, die in axialer Richtung zu den Zähnen 32 des Zahnrads 26 benachbart angeordnet sind.

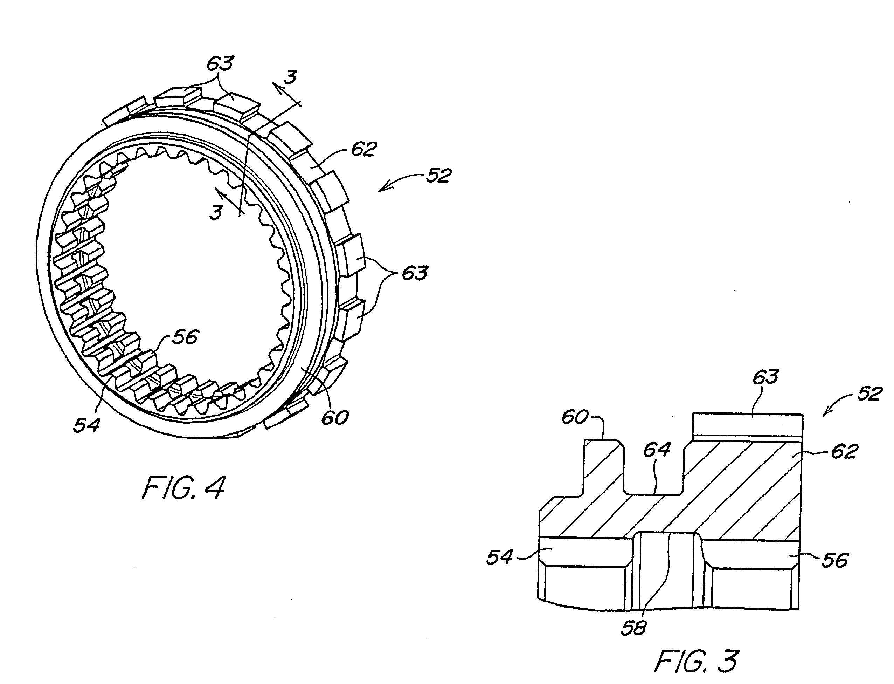

Eine ringförmige Schaltmuffe 52 ist derart montiert, dass sie die Zähne 50 und 32 übergreift. In Fig. 3 ist gezeigt, dass die ringförmige Schaltmuffe 52 einen im Wesentlichen zylindrischen Grundkörper mit zwei Sätzen von in axialer Richtung beabstandeten Zähnen 54 und 56 aufweist, welche durch eine innen verlaufende, ringförmige, sich in radialer Richtung erstreckende Ausnehmung 58 voneinander getrennt sind. An der äußeren Oberfläche des ringförmigen Zahnrads 52 sind zwei Ringstege 60 und 62 vorgesehen, welche durch eine außen verlaufende, ringförmige Ausnehmung 64 voneinander getrennt sind. Wie Fig. 4 entnehmbar ist, sind eine Vielzahl von Zähnen 63 auf dem Ringsteg 62 ausgebildet, welche von einem nicht gezeigten magnetischen Drehzahlsensor zur Detektion der vorliegenden Drehzahl genutzt werden können.

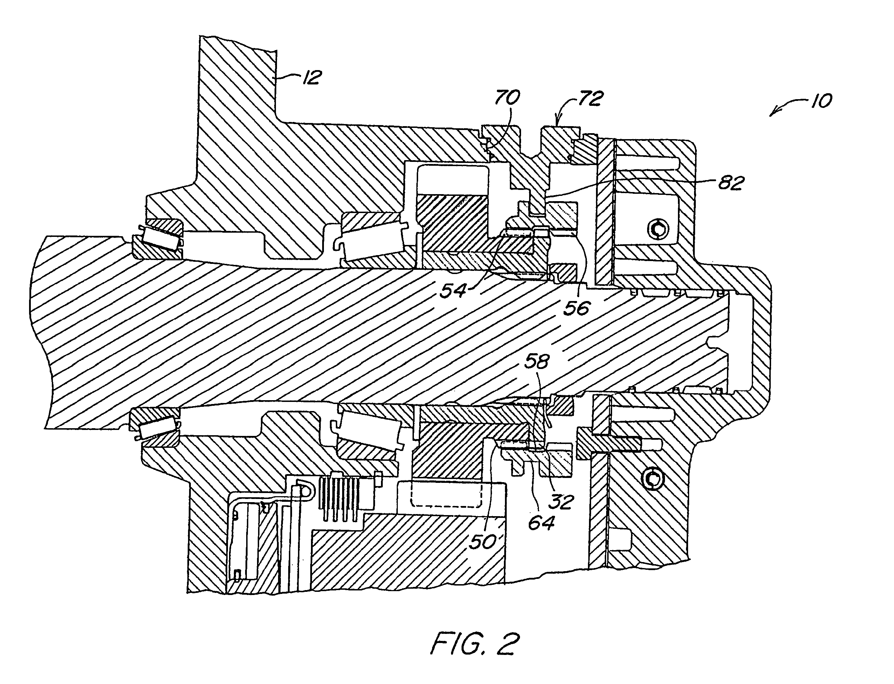

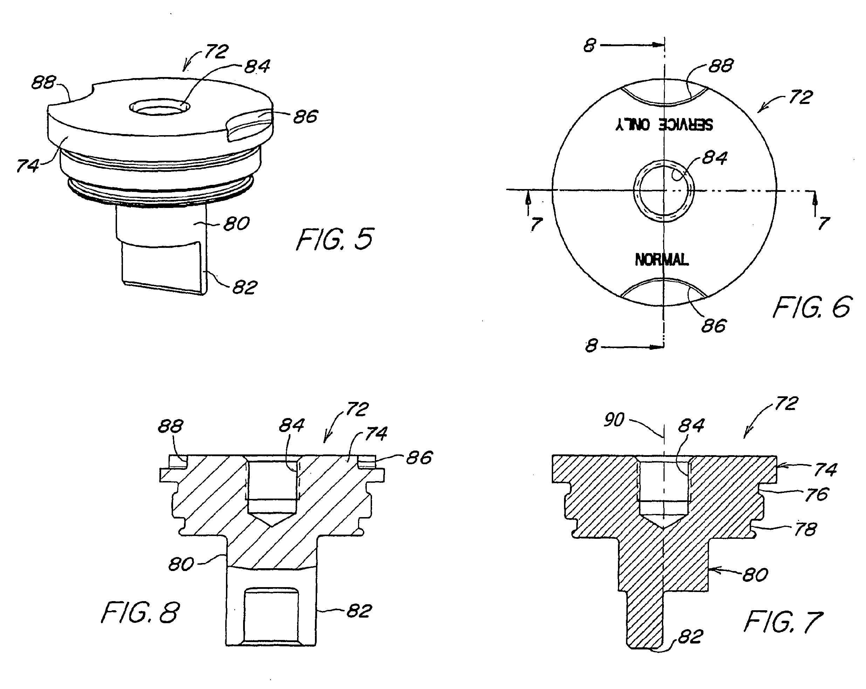

Gemäß den Fig. 1 und 2 weist das Gehäuse 12 eine Öffnung 70 auf. Ein insbesondere zu Wartungszwecken verwendbarer Stöpsel 72, welcher der Lagerfixierung des Zahnrads 52 dient, ist entfernbar in der Öffnung 70 befestigt. Den Fig. 5 bis 8 ist entnehmbar, dass der Stöpsel 72 einen im Wesentlichen zylindrischen Kopfabschnitt 74 aufweist, in welchem zwei ringförmige Rillen bzw. Ausnehmungen 76 und 78 vorgesehen sind, welche O-Dichtringe aufnehmen können. Ein zylindrischer Schaft 80 ist mittig angeordnet und ragt in axialer Richtung vom zylindrischen Kopfabschnitt 74 ab. Ein Vorsprung oder eine Nase 82 ragt in axialer Richtung von einer Seite' der endseitigen Oberfläche des Schafts 80 ab. Ein mit einem Gewinde versehenes, mittig angeordnetes Sackloch 84 erstreckt sich von der äußeren Oberfläche in den Stöpsel 72 hinein, um ein mit einem Gewinde versehenes - nicht gezeigtes - Werkzeug aufzunehmen, mit welchem der Stöpsel 72 manipuliert werden kann. Fig. 6 ist entnehmbar, dass geschriebene Anweisungen auf der außenliegenden Oberfläche des Kopfabschnitts 74 vorgesehen sind, um einen Bediener bei der Ausrichtung des Stöpsels 72 in der Öffnung 70 anzuleiten. In den Fig. 5, 6 und 8 ist gezeigt, dass zwei teilkreisförmige Ausschnitte 86 und 88 in einer radialen äußeren Peripherie der Oberfläche des Kopfabschnitts 74 vorgesehen sind. Fig. 7 ist entnehmbar, dass die Nase 82 seitlich versetzt ausgebildet oder insgesamt auf einer Seite bezüglich einer Mittelachse 90 des Kopfabschnitts 74 angeordnet ist.

Wenn der Stöpsel 72 in der Öffnung 70 angeordnet ist, wie es in Fig. 1 gezeigt ist, erstreckt sich die Nase 82 von der linken Seite des Schafts 80 in die Ausnehmung 64 der Schaltmuffe 52. Hierdurch wird die Schaltmuffe 52 in ihrer eingerückten Position gehalten, bei welcher die Zähne 54 und 56 im Eingriff mit den Zähnen 50 bzw. 32 stehen. In dieser Position des ringförmigen Zahnrads 52 kann ein Drehmoment von der Welle 14 auf die Welle 16 übertragen werden.

Zum Abkuppeln der Welle 14 von der Welle 16 wird der Stöpsel 72 aus der Öffnung 70 entfernt und es wird ein nicht gezeigtes Werkzeug durch die Öffnung 70 in die Ausnehmung 64 eingeführt. Mit diesem Werkzeug wird die Schaltmuffe 52 derart bewegt, dass sie nach rechts gleitet, um in die in Fig. 2 gezeigte abgekuppelte bzw. ausgerückte Position gebracht zu werden. Vorzugsweise wird der Stöpsel 72 dann derart orientiert, dass die Nase 82 auf der rechten Seite angeordnet ist, wenn der Stöpsel 72 in die Öffnung 70 wieder eingeführt wird, so dass die Nase 82 von der ringförmigen Ausnehmung 64 aufgenommen werden kann. Die Nase 82 hält dabei die Schaltmuffe 52 in ihrer ausgerückten Position, in welcher die Zähne 56 von den Zähnen 32 getrennt voneinander angeordnet sind. In dieser Position kann kein Drehmoment von der Welle 14 auf die Welle 16 übertragen werden.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Vorrichtung zum Unterbrechen einer Drehmomentverbindung eines Getriebes (10), mit welcher eine Übertragung eines Drehmoments von einer ersten Welle (14) auf eine zweite Welle (16) des Getriebes (10) steuerbar ist, mit einem Gehäuse (12), einem Kupplungselement (52) und einem Stöpsel (72), wobei das Gehäuse (12) eine erste Welle (14) und eine zweite Welle (16) drehbar aufnimmt und eine Öffnung (70) aufweist, wobei das Kupplungselement (52) von einer eingerückten Position, in welcher das Kupplungselement (52) die erste Welle (14) mit der zweiten Welle (16) kuppelt, in eine ausgerückte Position verbringbar ist, in welcher die erste Welle (14) von der zweiten Welle (16) abgekuppelt ist, wobei der Stöpsel (72) in der Öffnung (70) befestigbar und mit dem Kupplungselement (52) in Eingriff bringbar ist, und wobei der Stöpsel (72) von einer ersten Position, in welcher der Stöpsel (72) das Kupplungselement (52) in der eingerückten Position hält, zu einer zweiten Position verbringbar ist, in welcher der Stöpsel (72) das Kupplungselement (52) in der ausgerückten Position hält.

2. Vorrichtung nach Anspruch 1, **dadurch gekennzeichnet, dass** das Kupplungselement (52) ein hohles, ringförmiges Bauteil aufweist, welches eine der beiden Wellen (14, 16) aufnimmt.

3. Vorrichtung nach Anspruch 1 oder 2, **dadurch gekennzeichnet, dass** der Stöpsel (72) einen im Wesentlichen zylindrischen Kopfabschnitt (74) aufweist, welcher von der Öffnung (70) aufnehmbar ist, und dass der Stöpsel (72) eine Nase (82) aufweist, welche von dem Kopfabschnitt (74) abragt, wobei die Nase (82) mit dem Kupplungselement (52) in Eingriff bringbar ist, und wobei die Nase (82) seitlich versetzt zu einer Mittelachse (90) angeordnet ist.

4. Vorrichtung nach einem der Ansprüche 1 bis 3, **dadurch gekennzeichnet, dass** ein Antriebszahnrad (40) drehbar auf der ersten Welle (14) angeordnet ist, wobei das Antriebszahnrad (40) einen ersten Satz von Zähnen (44) aufweist, welche im kämmenden Eingriff mit hierzu korrespondierenden, an der zweiten Welle (16) vorgesehenen Zähnen (46) stehen, und wobei das Antriebszahnrad (40) einen zweiten Satz von Zähnen (50) aufweist.

5. Vorrichtung nach einem der Ansprüche 1 bis 4, **dadurch gekennzeichnet, dass** ein hohles Nabenzahnrad (26) auf der ersten Welle (14) drehfest angebracht ist, welches einen Satz von Zähnen (32) aufweist.

6. Vorrichtung nach Anspruch 4 oder 5, **dadurch gekennzeichnet, dass** das Kupplungselement (52) eine Schaltmuffe aufweist, welches mit dem Antriebszahnrad (40) und - vorzugsweise selektierbar - mit dem Nabenzahnrad (26) in Eingriff bringbar ist, wobei die Schaltmuffe eine ringförmige Ausnehmung (58) aufweist, welche einen Teil des Stöpsels (72) aufnimmt, insbesondere die Nase (82) des Stöpsels (72).

7. Vorrichtung nach einem der Ansprüche 4 bis 6, **dadurch gekennzeichnet, dass** das Kupplungselement (52) mit dem Antriebszahnrad (40) und dem Nabenzahnrad (26) in Eingriff bringbar ist, wobei das Kupplungselement (52) von einer eingerückten Position, in welcher das Kupplungselement (52) die Zähne (32) des Nabenzahnrads (26) mit dem zweiten Satz von Zähnen (50) des Antriebszahnrads (40) kuppelt, zu einer ausgerückten Position verbringbar ist, in welcher die Zähne (32) des Zahnrads (26) mit dem zweiten Satz von Zähnen (50) des Antriebszahnrads (40) abgekuppelt sind.

8. Vorrichtung nach einem der Ansprüche 1 bis 7, **dadurch gekennzeichnet, dass** das Kupplungselement (52) ein hohles, ringförmiges Bauteil aufweist, welches einen ersten Satz von inneren Zähnen (54) und einen davon in axialer Richtung beabstandet angeordneten zweiten Satz von inneren Zähnen (56) aufweist, wobei eine äußere Oberfläche des ringförmigen Bauteils einen ersten und einen zweiten Ringsteg (60, 62) aufweist, welche durch eine außen verlaufende, ringförmige, sich in radialer Richtung erstreckende Ausnehmung (64) voneinander beabstandet angeordnet sind, wobei der erste Satz der inneren Zähne (54) mit dem zweiten Satz der Zähne (50) des Antriebszahnrads (40) kämmt, und wobei der zweite Satz der inneren Zähne (56) mit den Zähnen (32) eines Eingangswellenzahnrades, vorzugsweise des Nabenzahnrads (26) selektierbar kämmt, wobei vorzugsweise eine ringförmige Ausnehmung (58) zwischen dem ersten und dem zweiten Satz von inneren Zähnen (54, 56) vorgesehen ist.

9. Vorrichtung nach Anspruch 8, **dadurch gekennzeichnet, dass** die ringförmige Ausnehmung (58) des Kupplungselements (52) die Zähne (32) des Antriebszahnrads (26) aufnimmt, wenn das Kupplungselement (52) in seiner ausgerückten Position ist.

10. Vorrichtung nach einem der Ansprüche 1 bis 9, **dadurch gekennzeichnet, dass** der Stöpsel (72) in einer äußeren Oberfläche eine Apertur (84) aufweist, welche ein Werkzeug aufnehmen kann.
